# EUROPEAN PATENT SPECIFICATION

(11) **EP 0 719 610 B1**
(45) Date of publication and mention of the grant of the patent: **21.11.2001**
(21) Application number: 95309080.0
(22) Date of filing: 13.12.1995
(51) Int. Cl.: B23D 51/10

(54) **Saw blade clamp**
Sägeblattaufspannvorrichtung
Dispositif de serrage pour lame de soie

(30) Priority: 20.12.1994 GB 9425721
(43) Date of publication of application: 03.07.1996
(73) Proprietor: Black & Decker Inc., Newark Delaware 19711 (US)
(72) Inventor: Woodward, Adrian, Royston, Herts SG8 0RJ (GB)
(74) Representative: Dlugosz, Anthony Charles

(56) References cited:
- EP-A- 0 582 326
- FR-A- 2 695 344
- US-A- 4 285 129
- US-A- 4 601 477

## Description

This invention relates to saw blade clamps according to the precharacterizing portion of claim 1, and in particular to a saw blade clamp for a jigsaw or the like; see US-A 4 601 477.

Jigsaws comprise a housing accommodating a motor for driving a reciprocating shaft which carries a saw blade clamp. When mounted in the saw blade clamp, a saw blade, which is usually long, thin and flat, extends below the housing of the jigsaw to cut workpieces. In the past, jigsaw clamps have comprised nuts and bolts for tightening a clamping plate against a base plate mounted on the reciprocating shaft with a saw blade gripped between the two plates. Often, during use of the jigsaw, the nuts and bolts have become loose, thereby allowing the saw blade to slip between the clamping plate and the base plate of the clamp. This is clearly undesirable. Further, it is tedious to have to release and re-tighten at least two nuts and bolts each time a saw blade is to be changed. Hence, the present invention aims to improve upon the known prior art saw blade clamps by providing a clamp which is simple to use yet effective in use.

According to the present invention, there is provided a saw blade clamp comprising a body defining a channel for a saw blade, a cylindrical pin carried by a spring mounted on the body, the pin being continuously biased by the spring towards an active position within the channel to contact and retain, in use, a saw blade within the channel, characterised in that the spring is a coil spring and in that the pin has a circumferential groove for receiving and aligning a saw blade presented thereto.

By including a groove, orientation of the saw blade may be defined more accurately.

Preferably the channel has three sides defined by the body, the fourth side of the channel being closed, in use, by a support to which the blade clamp is mounted.

In a preferred embodiment, the fourth side of the channel is closed by a reciprocating shaft of a jigsaw to which the clamp is attached. If this is the case, the reciprocating shaft may include a recess for seating an edge of the saw blade to improve positioning of the saw blade for cutting.

Preferably the releasable device includes a spring which biases the device towards the active position. More preferably, the spring is a coil spring having a free end which rests in a seat on the body. Further, the free end may include a hook for engagement with the seat.

In a preferred embodiment, two springs are provided acting on opposite sides of the channel.

The releasable device may include a pin which is continuously biased into the active position to contact a saw blade, in use, within the channel. Further, the pin may be carried by the or each spring.

If a pin is used, the axis of the pin is preferably substantially perpendicular to the axis of the channel. As a result, the side of the pin may roll along an edge of the saw blade during clamping of the saw blade in the channel.

The pin preferably engages a track which is inclined relative to the channel such that, as the pin moves along the track, the pin approaches or separates from the channel. As a result, when the releasable device is released, motion of the pin along the track disengages the pin from the saw blade within the channel, thereby allowing removal of the saw blade.

In a preferred embodiment, the track is orientated such that, in use, a force applied to cause unwanted withdrawal of the saw blade from the clamp results in the pin clamping the saw blade more tightly.

Preferably the track includes a ridge for retaining the pin in an inactive position to facilitate insertion and withdrawal of a saw blade.

In a particular embodiment, the body may have a substantially T-shaped cross section, the channel being formed in the top of the T and the track being formed in the leg of the T.

As mentioned above, a clamp according to the present invention is particularly suitable for use with a jigsaw, the clamp simply being screwed or otherwise attached to a reciprocating shaft of the jigsaw. When the clamp is used in such an application, a stop is preferably carried by the reciprocating shaft for engaging in a recess or notch in the saw blade to prevent accidental release of the saw blade. The stop may be formed integrally with the shaft or provided by a pin slidably mounted through the shaft.

Specific embodiments of the present invention are now described, by way of example only, with reference to the accompanying drawings, in which:
Figure 1 is a front view of a saw blade clamp according to the present invention;
Figure 2 is a side view of the saw blade clamp of Figure 1;
Figure 3 is a section on the line A-A of Figure 2;
Figure 4 is a front view of a second embodiment of saw blade clamp according to the present invention; and
Figure 5 is a side view of the saw blade clamp of Figure 4.

With reference to the drawings, in which like components are given the same reference numerals, a saw blade clamp 1 according to the present invention comprises a body 3 and a releasable clamping device 5. The saw blade clamp 1 is shown in the drawings mounted by screws 7, one of which is shown, to a reciprocating shaft 9 of a jigsaw (not shown). The saw blade 11 used for cutting workpieces is held in the clamp 1 by means of the releasable clamping device 5.

The body 3 has a substantially T-shaped cross section, as shown in Figure 3. Three sides of a channel 13 are defined in the top of the T, the fourth side of the channel 13 being closed by the reciprocating shaft 9. As can be seen in Figure 3, the reciprocating shaft 9 includes a V-shaped longitudinal groove 15 which receives an edge of the saw blade 11 to assist in correctly aligning the saw blade 11 for cutting.

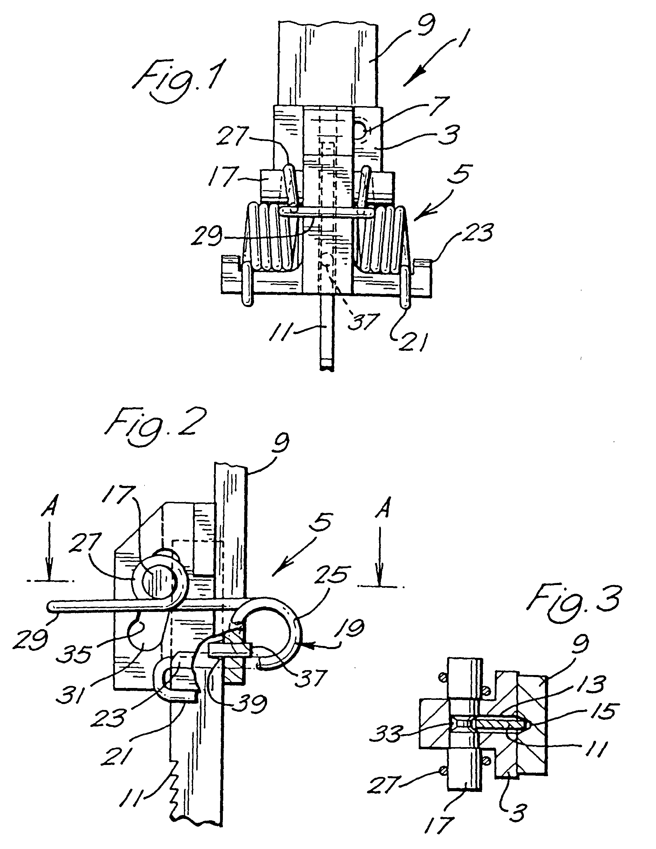

The side of the channel 13 opposite to the V-shaped groove 15 is partially open to allow access to the saw blade 11 within the channel 13. Hence, a roller or pin 17 forming part of the releasable clamping device 5 can contact an edge of the saw blade 11. The pin 17 is carried by a double torsion spring 19 which is mounted on either side of the channel 13, as shown in Figures 1 and 4, for example. Each side of the double torsion spring 19 includes (i) a hooked end 21 engaging a seat 23 forming part of the body 3, (ii) a first helical portion 25 in torsion, (iii) a second helical portion 27 surrounding an end of the pin 17 and (iv) a free end 29 acting as a lever in combination with the free end 29 of the other portion of the double torsion spring 19 on the opposite side of the body 3.

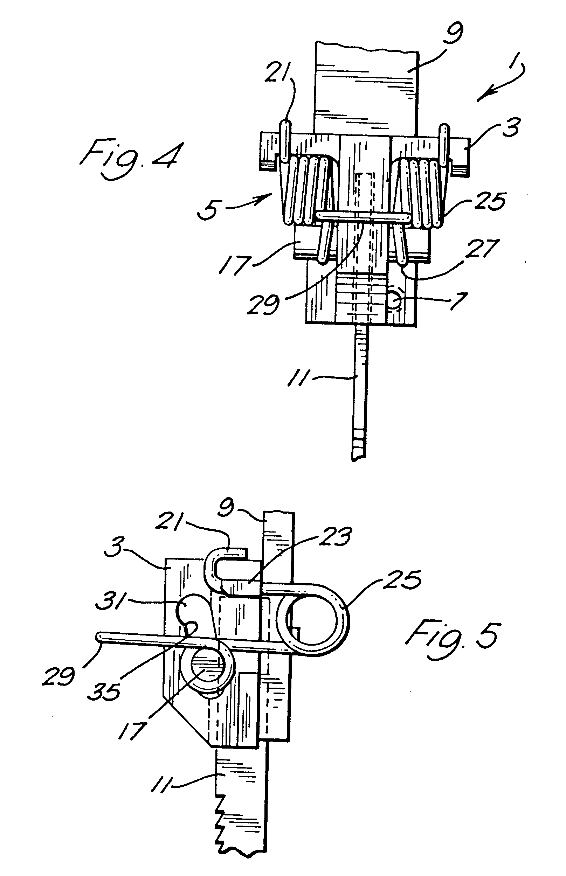

As can be seen in Figures 2 and 5, the pin 17 is arranged to travel in a track 31 formed in the leg of the T-shaped body 3. Hence, if the two free ends 29, which form a lever, are pushed downwards (in Figure 2) or upwards (in Figure 5), the pin 17 is moved away from the saw blade 11, thereby releasing the saw blade 11. Withdrawal of the saw blade 11 can then be effected. Conversely, when the free ends 29 are released, the torsion springs 25 urge the pin 17 upwards (in Figure 2) or downwards (in Figure 5) towards the channel 13 and into contact with the saw blade 11. Clamping or gripping of the saw blade 11 between the pin 17 and the reciprocating shaft 9 is thereby achieved to prevent removal of the saw blade 11 during use of the jigsaw.

As can be seen in Figure 3, the pin 17 is provided with a circumferential groove 33 which receives the saw blade 11 to assist in aligning the saw blade 11 for cutting. Further, as a result of being cylindrical, the pin 17 can roll along the edge of the saw blade 11 during clamping or release of the saw blade 11.

Although both embodiments of the present invention shown in the drawings function satisfactorily, the second embodiment shown in Figures 4 and 5 includes the feature wherein, if a downward force is applied to the saw blade 11, friction between the saw blade 11 and the pin 17 causes the pin 17 to move further along the track 31 and into the channel 13. As a result of this, the saw blade 11 is gripped more forcefully between the pin 17 and the reciprocating shaft 9, thereby ensuring that the saw blade 11 is retained in the clamp 1.

As a failsafe against a saw blade 7 accidentally releasing from the clamp 1, a stop 37 is carried by the reciprocating shaft 9 for engaging in a recess or notch 39 in the back of the saw blade 7 (cf. Figure 2). The stop 37 may be formed integrally with the reciprocating shaft 9 or take the form of a movable pin which can slide through the shaft 9 into position. In any event, once the stop 37 is active, the saw blade 7 is prevented from disengaging from the clamp 1 unless the clamping device 5 is released.

Although not mentioned above, it will be appreciated that a clamp according to the present invention can accommodate saw blades having different depths (i.e. from front to back), due to the angle of the track 31. More particularly, blades having depths between 0.8mm and 1.8mm, for example, may be accommodated, the pin 17 simply engaging the relevant saw blade when at an appropriate position in the track. Blades having different thicknesses may also be readily accommodated due to the inclusion of V-grooves on the reciprocating shaft 9 and circumferentially around the pin 17.

Finally, the track 31 includes a ridge 35 which can hold the pin 17 spaced from the channel 13. Hence, if a force is applied to the free ends 29 of the double torsion spring 19, the pin 17 can be moved along the track 31 and over the ridge 35. The releasable clamping device 5 is thereby held in a release position so that a user can remove or insert a saw blade 11 into the clamp 1. When it is once again desired to clamp a saw blade 11, a force simply needs to be applied to the free ends 29 of the double torsion spring 19 to overcome the ridge 35 such that the torsion springs 25 force the pin 17 back into the channel 13, and hence into contact with the saw blade 11.

It will of course be understood that the present invention has been described above purely by way of example, and that modifications of detail can be made within the scope of the invention as defined in the claims.

## Claims

1. A saw blade clamp (1) comprising a body (3) defining a channel (13) for a saw blade (11), a cylindrical pin (17) carried by a spring (19) mounted on the body, the pin being continuously biased by the spring towards an active position within the channel to contact and retain, in use, a saw blade within the channel, **characterised in that** the spring (19) is a coil spring and **in that** the pin has a circumferential groove (33) for receiving and aligning a saw blade presented thereto.

2. A clamp as claimed in claim 1, wherein the channel has three sides defined by the body, the fourth side being closed, in use, by a support to which the blade clamp is mounted.

3. A clamp as claimed in claim or claim 2, wherein the coil spring is a torsion spring having a free end which rests in a seat on the body.

4. A clamp as claimed in claim 3, wherein the free end of the spring includes a hook (21) for engagement with the seat.

5. A clamp as claimed in any preceding claim, wherein two springs are provided, one acting on each side of the channel.

6. A clamp as claimed in any preceding claim, wherein the axis of the pin is substantially perpendicular to the axis of the channel.

7. A clamp as claimed in any preceding claim, wherein the pin engages a track (31) which is inclined relative to the channel such that, as the pin moves along the track, the pin approaches or separates from the channel.

8. A clamp as claimed in claim 7, wherein the track is orientated such that, in use, a force applied to cause unwanted withdrawal of the saw blade results in the pin clamping the saw blade more tightly.

9. A clamp as claimed in claim 7 or claim 8, wherein the track includes a ridge (35) for retaining the pin in an inactive position to facilitate insertion and withdrawal of a saw blade.

10. A clamp as claimed in any one of claims 7 to 9, wherein the body has a substantially T-shaped cross section, the channel being formed in the top of the T and the track being formed in the leg of the T.

11. A jigsaw comprising a saw blade clamp according to any preceding claim, wherein the clamp is mounted on a reciprocating shaft (9) of the jigsaw.

12. A jigsaw as claimed in claim 11, wherein a stop (37) is carried by the reciprocating shaft and engages in a recess or notch (39) in the saw blade to prevent accidental release of the saw blade.

## Patentansprüche

1. Sägeblattaufspannvorrichtung (1), mit einem Körper (3), der einen Kanal (13) für ein Sägeblatt (11) definiert, einem zylindrischen Stift (17), der durch eine Feder (19) gehalten ist, die an dem Körper montiert ist, wobei der Stift ständig durch die Feder in Richtung einer aktiven Position in dem Kanal vorgespannt ist, um ein Sägeblatt zu kontaktieren und bei Gebrauch in dem Kanal zu halten, **dadurch gekennzeichnet, daß** die Feder (19) eine Schraubenfeder ist und daß der Stift eine Umfangsnut (33) hat, um ein Sägeblatt aufzunehmen und auszurichten, das daran vorhanden ist.

2. Aufspannvorrichtung nach Anspruch 1, bei der der Kanal drei Seiten hat, die durch den Körper definiert sind, wobei die vierte Seite bei Gebrauch durch eine Abstützung geschlossen ist, an der die Sägeblattaufspannvorrichtung bei Gebrauch montiert ist.

3. Aufspannvorrichtung nach Anspruch 1 oder Anspruch 2, bei der die Schraubenfeder eine Torsionsfeder ist, die ein freies Ende hat, das in einem Sitz an dem Körper gehalten ist.

4. Aufspannvorrichtung nach Anspruch 3, bei der das freie Ende der Feder einen Haken (21) zum Eingreifen mit dem Sitz aufweist.

5. Aufspannvorrichtung nach einem der vorhergehenden Ansprüche, bei der zwei Federn vorgesehen sind, wobei eine an jeder Seite von dem Kanal wirkt.

6. Aufspannvorrichtung nach einem der vorhergehenden Ansprüche, bei der die Achse von dem Stift im wesentlichen senkrecht zu der Achse von dem Kanal verläuft.

7. Aufspannvorrichtung nach einem der vorhergehenden Ansprüche, bei der der Stift mit einer Führung (31) eingreift, die relativ zu dem Kanal so geneigt ist, daß dann, wenn sich der Stift entlang der Führung bewegt, sich der Stift dem Kanal nähert oder sich davon entfernt.

8. Aufspannvorrichtung nach Anspruch 7, bei der die Führung so ausgerichtet ist, daß bei Gebrauch eine Kraft aufgebracht wird, um zu bewirken, daß ein unerwünschtes Herausziehen des Sägeblattes dazu führt, daß der Stift das Sägeblatt noch fester einspannt.

9. Aufspannvorrichtung nach Anspruch 7 oder Anspruch 8, bei der die Führung eine Rippe (35) hat, um den Stift in einer inaktiven Position zu halten, um das Einsetzen und Herausziehen von einem Sägeblatt zu erleichtern.

10. Aufspannvorrichtung nach einem der Ansprüche 7 bis 9, bei der der Körper einen im wesentlichen T-förmigen Querschnitt hat, wobei der Kanal in der Oberseite von dem T und die Führung in dem Schenkel von dem T ausgebildet ist.

11. Stichsäge mit einer Sägeblattaufspannvorrichtung nach einem der vorhergehenden Ansprüche, bei der die Aufspannvorrichtung an einer sich hin- und herbewegenden Welle (9) der Stichsäge montiert ist.

12. Stichsäge nach Anspruch 11, bei der ein Anschlag (37) durch die sich hin- und herbewegende Welle gehalten ist und in eine Ausnehmung oder Kerbe (39) in dem Sägeblatt eingreift, um ein versehentliches Lösen des Sägeblattes zu verhindern.

## Revendications

1. Système de serrage (1) pour une lame de scie comprenant un corps (3) définissant un canal (13) pour une lame de scie (11), une broche cylindrique (17) portée par un ressort (19) monté sur le corps, la broche étant sollicitée continûment par le ressort en direction d'une position active à l'intérieur du canal pour venir en contact avec et retenir, en fonctionnement, une lame de scie à l'intérieur du canal, **caractérisé en ce que** le ressort (19) est un ressort hélicoïdal et que la broche possède une gorge circonférentielle (33) servant à recevoir et aligner une lame de scie qui lui est présentée.

2. Système de serrage selon la revendication 1, dans lequel le canal possède trois côtés définis par le corps, le quatrième côté étant fermé, en cours d'utilisation, par un support sur lequel le système de serrage de la lame est monté.

3. Système de serrage selon la revendication 1 ou la revendication 2, dans lequel le ressort hélicoïdal est un ressort de torsion possédant une extrémité libre, qui est en appui dans un siège présent sur le corps.

4. Système de serrage selon la revendication 3, dans lequel l'extrémité libre du ressort inclut un crochet (21) destiné à engrener avec le siège.

5. Système de serrage selon l'une quelconque des revendications précédentes, dans lequel des ressorts sont prévus, qui agissent chacun sur un côté du canal.

6. Système de serrage selon l'une quelconque des revendications précédentes, dans lequel l'axe de la broche est essentiellement perpendiculaire à l'axe du canal.

7. Système de serrage selon l'une quelconque des revendications précédentes, dans lequel la broche s'engage dans une piste (31), qui est inclinée par rapport au canal de telle sorte que, lorsque la broche se déplace le long de la piste, elle se rapproche ou s'écarte du canal.

8. Système de serrage selon la revendication 7, dans lequel une piste est orientée de telle sorte qu'en cours d'utilisation, une force appliquée de manière à provoquer un retrait indésirable de la lame de scie conduit au fait que la broche serre plus fortement la lame de scie.

9. Système de serrage selon la revendication 7 ou 8, dans lequel la piste inclut une nervure (35) servant à retenir la broche dans une position inactive pour faciliter l'insertion et le retrait d'une lame de scie.

10. Système de serrage selon l'une quelconque des revendications 7 à 9, dans lequel le corps possède une section transversale essentiellement en forme de T, le canal étant formé dans la partie supérieure du T et la piste étant formée dans le pied du T.

11. Scie à découper comprenant un système de serrage de la lame de scie selon l'une quelconque des revendications précédentes, dans laquelle le système de serrage est monté sur un arbre (9), qui se déplace en va-et-vient, de la scie à découper.

12. Scie à découper selon la revendication 11, dans laquelle une butée (37) est portée par l'arbre qui se déplace en va-et-vient et s'engage dans un renfoncement ou une encoche (39) formée dans la lame de scie pour empêcher une libération accidentelle de la lame de scie.
